# EUROPEAN PATENT SPECIFICATION

(11) **EP 0 342 975 B1**
(45) Date of publication and mention of the grant of the patent: **28.07.1993**
(21) Application number: 89305030.2
(22) Date of filing: 18.05.1989
(51) Int. Cl.: B21D 53/08, B23P 15/26

(54) **Radiator assembly kit and method**
Heizkörpermontagevorrichtung und Verfahren
Dispositif d'assemblage de radiateur et procédé

(30) Priority: 18.05.1988 GB 8811755
(43) Date of publication of application: 23.11.1989
(73) Proprietor: THE FIN MACHINE CO. LTD., Cleckheaton West Yorkshire BD19 5LJ (GB)
(72) Inventor: Topping, John, Wilpshire Blackburn BB1 9HX (GB); Hargreaves, Colin, West Yorkshire (GB); Palmer, Clifford, Huddersfield HD3 3TE (GB)
(74) Representative: Neill, Alastair William

(56) References cited:
- EP-A- 0 020 222
- EP-A- 0 028 400
- WO-A-80/00228
- WO-A-87/07855
- GB-A- 1 449 296
- GB-A- 2 156 108
- US-A- 4 486 933
- PATENT ABSTRACTS OF JAPAN, vol. 7, no. 59 (M-199)[1204], 11th March 1983; & JP-A-57 205 030 (NIPPON RADIATOR K.K.) 16-12-1982
- PATENT ABSTRACTS OF JAPAN, vol. 8, no. 57 (M-283)[1494], 15th March 1984 & JP-A-58 209 135 (NIPPON RADIATOR K.K.) 06-12-1983

## Description

This invention relates to a heat exchanger assembly apparatus and a method of assembling a heat exchanger. The apparatus and method may, more particularly, be of utility for assembling vehicle radiators comprising a plurality of coolant tubes separated by heat radiating fins.

European Patent Publication Number 0 028 400 (Granges Metallverken Aktiebolag) discloses a heat exchanger assembly apparatus and method in which tubes and fin elements are fed into grooves in a rotatable drum, with a tube and fin element being positioned together in each groove. At an ejecting station, the tube and fin elements are ejected from the drum by an expelling device. An advancing means advances the tube and fin elements along a transportation path whereupon the elements are soldered to form units.

United States Patent Number 4 486 933 (Nippondenso Co Ltd) discloses a heat exchanger assembly apparatus and method according to the preamble of claims 1 and 8. The apparatus includes two parallel rows of horizontally moving chain attachments arranged to receive tubes and fins. An insert throwing-in station, a tube throwing-in station and a fin throwing-in station are arranged along the direction of movement of the chain attachments and the core of the heat exchanger is gradually built up.

According to the present invention, there is provided a heat exchanger assembly apparatus comprising:
tube storage means for storing an array of cooler tubes;
tube supply means for supplying cooler tubes from said tube storage means to an assembly area;
fin supply means for supplying fins to said assembly area;
support means for maintaining a matrix of fins and tubes in an alternate arrangement;
characterised in that two axially spaced apart, rotatably mounted, grooved drums are arranged in said assembly area, said drums being arranged to support said matrix and being further arranged to rotate and thereby to move said matrix away from the assembly area in a direction which is substantially parallel to the rotational axes of the drums.

Preferably, said fin supply means includes a fin mill. One example of such a fin mill is described in U.K. Patent Publication No. 2 156 108 entitled "Processing machine for producing finned strip material."

In some embodiments the tubes may be stored in a vertically arranged stack. In such a case, the cross-section of the tubes may be flattened (i.e. a generally elongate elliptical shape as opposed to the usual circular or plain elliptical shape). Thus, preferably, said tube storage means is arranged to store tubes in a vertical stack, said stack being arranged to retain relatively flat tubes in a horizontal orientation.

Preferably, said tube supply means comprises at least one paddle wheel (or drum) having at least one notch and being arranged so that, as the wheel (or drum) rotates, the notch may receive a tube from the tube storage means and move the tube through a circular arc, to one end of the matrix adjacent a fin.

Preferably, said two axially spaced apart, rotatably mounted, grooved drums are substantially cylindrical and have helical grooves.

The paddle wheel periphery may rotate concentrically about its axis or it may rotate eccentrically about its axis. The eccentricity (or throw) of the paddle wheel would be equal to the helical groove pitch of drum and 2 notches in periphery of paddle wheel for tube extraction may be placed one at each end of the throw.

The apparatus may further comprise a lower table for supporting a lower matrix and an upper shelf for supporting an upper matrix. In one embodiment, the apparatus comprises a lower table for supporting a lower row of tubes, and two parallel upper shelves for supporting an upper row of tubes. Preferably, the apparatus is arranged so that fins and tubes may be selectively supplied onto the table or shelf.

The invention extends to a method of assembling a heat exchanger, the method comprising:
supplying cooler tubes and fins to an assembly area so as to construct a matrix of fins and tubes in alternate arrangement;
moving the matrix away from the assembly area;
characterised in that two axially spaced apart, rotatably mounted, grooved drums are provided in said assembly area and, in the method, said matrix is supported in grooves of the drums; and
said matrix is moved away from the assembly area in a direction substantially parallel to the rotational axes of said grooved drums by rotation of said drums.

Preferably, in the method, the fins are received, one after another, from a fin mill and tubes removed, one after another, from a stack of tubes, so as to construct said matrix. In the method, tubes may be supplied to the assembly area by using a paddle wheel (or drum) having at least one notch, said wheel (or drum) being rotated such that said notch receives a tube from a tube storage means and moves a tube, through a circular arc, to one end of the matrix adjacent a fin. Preferably, each tube which is dispensed from said tube storage means by the paddle wheel (or drum) is held in position in the matrix by means of its ends being retained in respective helical grooves of said two axially spaced apart, rotatably mounted, grooved drums. Suitably, in the method, as the drums are indexed the matrix is assembled using a shelf or a table or both, in a continuous system moving away from the tube supply.

In the method, fins may be supplied to the assembly area by passing the fin along a deep groove in a said rotatably mounted, grooved drum (the said groove being adjacent to or in alignment with the location from which the fins are dispensed) and locating the fin between tubes at the start of matrix formation.

Preferably, once the matrix of fins and tubes reaches a predetermined size, it is removed from its location in the grooves of the drums and formed into a rigid self-supporting matrix. Preferably, after removal, an upper and lower cooler tank is fitted to the tubes of the matrix, so that coolant is able to flow from one tank to the other via the tubes.

One embodiment of the present invention will now be described, by way of example only, with reference to the accompanying drawings, in which:-
Figure 1 is a perspective view of the general arrangement of the present radiator assembly system;
Figure 2 is an end view of a typical (two row) fin/tube matrix;
Figure 3 is a side view of a paddle wheel, tube stack and drum of Figure 1;

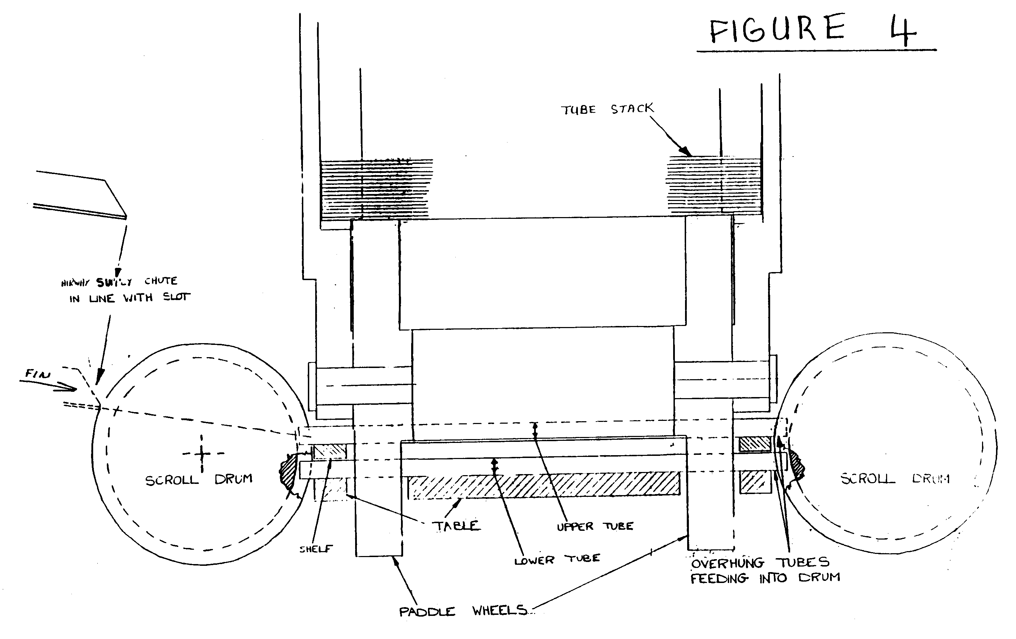

Figure 4 is a front cross-sectional view through the table and shelves of Figure 1 showing the tube stack and the scroll drums; and,

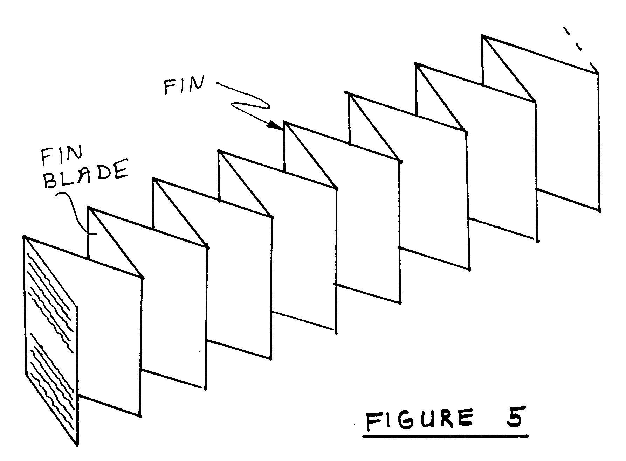

Figure 5 is a perspective view of a fin.

This embodiment of the radiator assembly system will now be described hereinafter in simple terms only. If further clarification is sought reference should be made to the text hereinabove.

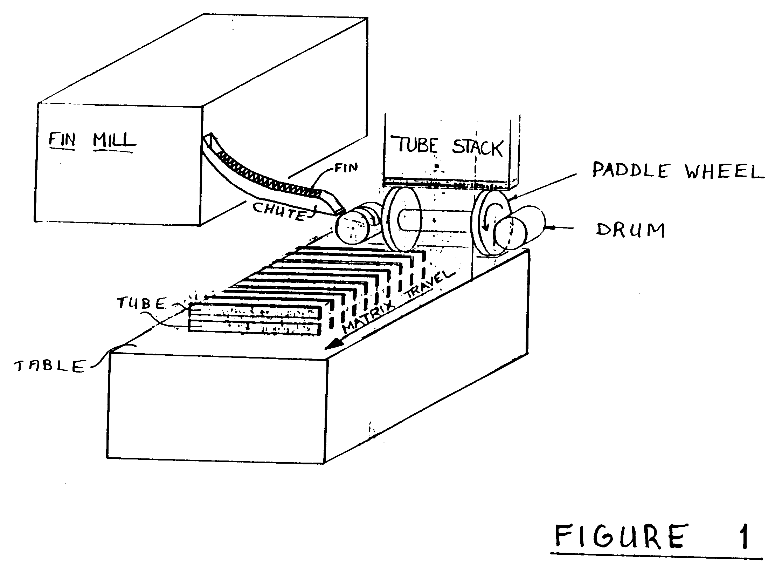

In Figure 1 a fin is shown in the chute leading from the fin mill to the lefthand scroll drum. The fin chute is designed so that the fin will pass from it into a deep groove of the lefthand drum. The fin will then pass from the deep groove of the drum and into the matrix.

A plurality of flattened tubes are stacked in an array in the tube stack, the stack being located above a pair of paddle wheels. In use the tube at the bottom of the stack rests upon the top edge (face) of the respective paddle wheels so that, as the wheels turn, a notch on each wheel moves past the base of the stack to receive one end of the lowermost tube. The paddle wheels continue rotating (in the direction of the arrow on Figure 1) so that the tube is carried towards the said end of the matrix.

As the tube reaches the helical groove in the drum the tube ends pass down the groove and come to rest on the shelf or the table. By reason of the eccentric rotation of paddle wheel periphery the first tube would enter a helical groove at the forward position and pass down to the shelf and the following tube would enter a helical groove at the adjacent rearward position and pass down to the table.

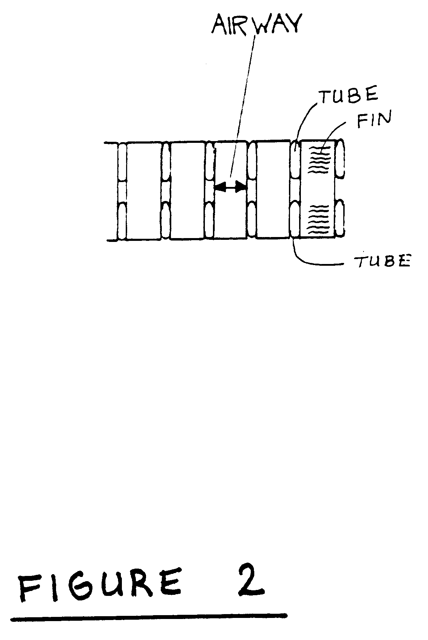

In this manner a matrix having an alternate structure of tubes at two levels and fins (as shown in Figure 2) may be manufactured.

As is indicated in Figure 1 the tube/fin matrix is gradually moved away from the tube supply as the size of the matrix is increased. This is advantageous in that it allows a stationary fin mill and tube stack to be used.

The matrix of tubes and fins is moved by means of the pair of scroll drums. Since the end of each tube of the matrix is held in the helical groove of a drum and the fins of the matrix are sandwiched between the said tubes, the matrix will be advanced in the direction shown in the drawings if the drums are rotated about their axes.

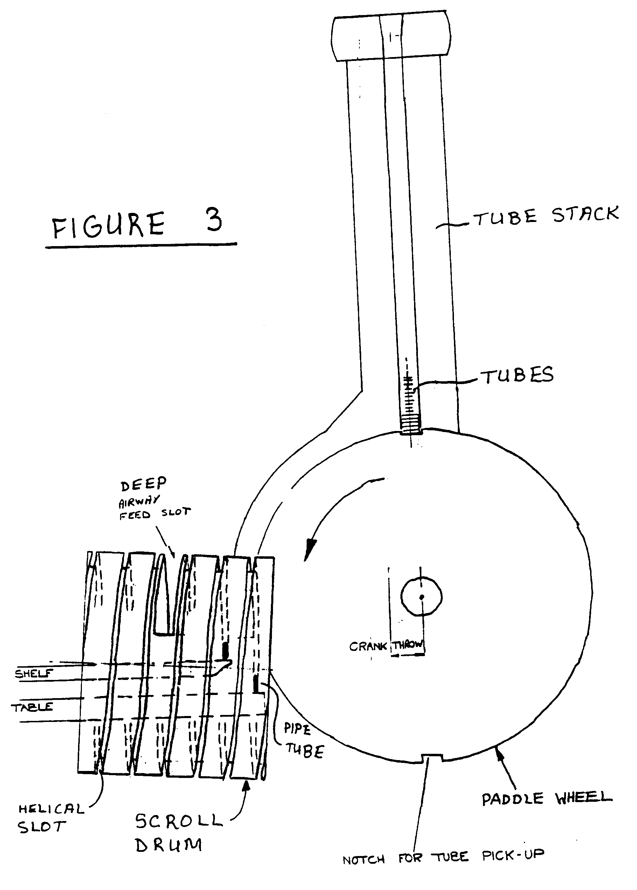

The particular construction of the lefthand scroll drum will not be described since it is apparent from Figure 3. The righthand scroll drum is virtually identical to the lefthand version except there may or may not be a deep "airway" slot for the fins and/or the direction of the spiral may be opposite to that of the lefthand drum.

The paddle wheel could have multiple strokes to feed several tubes during outstroke, and these could enter the drum at matching pitches. The drum could have a two start scroll instead of a single start scroll to accommodate the feature. By a suitable combination of notches and scroll 1,2,3,4, etc tube high matrix can be built.

Other features of the present invention will also be apparent with reference to the accompanying drawings.

## Claims

1. Heat exchanger assembly apparatus comprising:
tube storage means for storing an array of cooler tubes;
tube supply means for supplying cooler tubes from said tube storage means to an assembly area;
fin supply means for supplying fins to said assembly area;
support means for maintaining a matrix of fins and tubes in an alternate arrangement;
characterised in that two axially spaced apart, rotatably mounted, grooved drums are arranged in said assembly area, said drums being arranged to support said matrix and being further arranged to rotate and thereby to move said matrix away from the assembly area in a direction which is substantially parallel to the rotational axes of the drums.

2. Apparatus according to Claim 1, wherein said fin supply means includes a fin mill.

3. Apparatus according to Claim 1 or Claim 2, wherein said tube storage means is arranged to store tubes in a vertical stack, said stack being arranged to retain relatively flat tubes in a horizontal orientation.

4. Apparatus according to any of the preceding claims, wherein said tube supply means comprises at least one paddle wheel (or drum) having at least one notch and being arranged so that, as the wheel (or drum) rotates, the notch may receive a tube from the tube storage means and move the tube through a circular arc, to one end of the matrix adjacent a fin.

5. Apparatus according to any preceding claim, wherein said two axially spaced apart, rotatably mounted, grooved drums are substantially cylindrical and have helical grooves.

6. Apparatus according to any of the preceding claims, the apparatus further comprising a lower table for supporting a lower matrix and an upper shelf for supporting an upper matrix.

7. Apparatus according to Claim 6, wherein the apparatus is arranged so that fins and tubes may be selectively supplied onto the table or shelf.

8. A method of assembling a heat exchanger, using the apparatus according to claims 1 to 7, the method comprising:
supplying cooler tubes and fins to an assembly area so as to construct a matrix of fins and tubes in alternate arrangement;
moving the matrix away from the assembly area;
characterised in that two axially spaced apart, rotatably mounted, grooved drums are provided in said assembly area and, in the method, said matrix is supported in grooves of the drums; and
said matrix is moved away from the assembly area in a direction substantially parallel to the rotational axes of said grooved drums by rotation of said drums.

9. A method according to Claim 8, wherein, in the method, the fins are received, one after another, from a fin mill and tubes removed, one after another, from a stack of tubes, so as to construct said matrix.

10. A method according to Claim 8 or Claim 9, wherein, in the method, tubes are supplied to the assembly area by using a paddle wheel (or drum) having at least one notch, said wheel (or drum) being rotated such that said notch receives a tube from a tube storage means and moves a tube, through a circular arc, to one end of the matrix adjacent a fin.

11. A method according to Claim 10, wherein each tube which is dispensed from said tube storage means by the paddle wheel (or drum) is held in position in the matrix by means of its ends being retained in respective helical grooves of said two axially spaced apart, rotatably mounted, grooved drums.

12. A method according to any of Claims 8 to 11, wherein, in the method, fins are supplied to the assembly area by passing the fin along a deep groove in a said rotatably mounted, grooved drum and locating the fins between tubes at the start of matrix formation.

13. A method according to any of Claims 8 to 12, wherein once the matrix of fins and tubes reaches a predetermined size, it is removed from its location in the grooves of the drums and formed into a rigid self-supporting matrix.

14. A method according to Claim 13, wherein after removal, an upper and lower cooler tank is fitted to the tubes of the matrix, so that coolant is able to flow from one tank to the other via the tubes.

## Patentansprüche

1. Heizkörper-Montagevorrichtung, umfassend einen Schlangenspeicher zum speichern einer Reihe von Kühlschlangen;
eine Schlangenzuführvorrichtung zum Zuführen von Kühlschlangen vom Schlangenspeicher zu einem Montagebereich;
eine Rippenzuführvorrichtung zum Zuführen von Rippen zu dem genannten Montagebereich;
einen Träger zum Halten einer Matrix aus Rippen und Schlangen in abwechselnder Anordnung;
dadurch gekennzeichnet, daß zwei einen axialen Abstand aufweisende, drehbar gelagerte, genutete Trommeln im Montagebereich angeordnet sind, daß die Trommeln derart angeordnet sind, daß sie die Matrix tragen, und daß sie weiterhin derart angeordnet sind, daß sie umlaufen und hierbei die Matrix vom Montagebereich in einer Richtung hinweg fördern, die im wesentlichen parallel zu den Drehachsen der Trommeln verläuft.

2. Vorrichtung nach Anspruch 1, dadurch gekennzeichnet, daß die Rippenzuführvorrichtung eine Rippenformstation umfaßt.

3. Vorrichtung nach Anspruch 1 oder 2, dadurch gekennzeichnet, daß der Schlangenspeicher derart angeordnet ist, daß er die Schlangen in einem vertikalen Stapel speichert, und daß der Stapel derart angeordnet ist, daß er relativ flache Schlangen in horizontaler Ausrichtung aufnimmt.

4. Vorrichtung nach einem der vorausgegangenen Ansprüche, dadurch gekennzeichnet, daß die Schlangenzuführeinrichtung wenigstens ein Paddelrad (oder eine Trommel) mit wenigstens einer Nut aufweist, und derart angeordnet ist, daß beim Umlauf des Rades (oder der Trommel) die Nut eine Schlange vom Schlangenspeicher aufzunehmen vermag, und die Schlange auf einer Kreisbahn zu einem Ende der Matrix im Bereich einer Rippe fördert.

5. Vorrichtung nach einem der vorausgegangenen Ansprüche, dadurch gekennzeichnet, daß die beiden axial einen Abstand aufweisenden, drehbar gelagerten, genuteten Trommeln im wesentlichen zylindrisch sind und schraubenlinienförmigen Nuten aufweisen.

6. Vorrichtung nach einem der Vorausgegangenen Ansprüche, dadurch gekennzeichnet, daß diese einen unteren Tisch zum Tragen einer unteren Matrix und eine obere Platte zum Tragen einer oberen Matrix aufweist.

7. Vorrichtung nach Anspruch 6, dadurch gekennzeichnet, daß diese derart angeordnet ist, daß Rippen und Schlangen selektiv dem Tisch oder der Platte zugeführt werden können.

8. Verfahren zum Montieren eines Heizkörpers unter Verwendung der Vorrichtung gemäß der Ansprüche 1 bis 7, umfassend:
Zuführen von Kühlschlangen und Rippen zu einem Montagebereich um eine Matrix aus Rippen und Schlangen in abwechselnder Anordnung aufzubauen;
Bewegen der Matrix vom Montagebereich hinweg;
dadurch gekennzeichnet, daß zwei einen axialen Abstand aufweisende, drehbar gelagerte, genutete Trommeln im Montagebereich angeordnet sind, und daß beim Verfahren die Matrix in Nuten der Trommeln getragen ist; und
daß die Matrix vom Montagebereich in einer Richtung hinwegbewegt wird, die im wesentlichen parallel zu den Drehachsen der genuteten Trommeln durch deren Umlauf verläuft.

9. Verfahren nach Anspruch 8, dadurch gekennzeichnet, daß die Rippen bei dem Verfahren nacheinander von einer Rippenformstation aufgenommen und die Schlangen nacheinander aus einem Stapel von Schlangen entnommen werden, um die Matrix aufzubauen.

10. Verfahren nach Anspruch 8 oder 9, dadurch gekennzeichnet, daß bei den Verfahren Schlangen dem Montagebereich unter Verwendung eines Paddelrades (oder einer Trommel) mit wenigstens einer Nut zugefördert werden, und daß das Rad (oder die Trommel) derart verdreht werden, daß die Nut eine Schlange von einem Schlangenspeicher aufnimmt und diese auf einer Kreisbahn zu einem Ende der Matrix im Bereich einer Rippe fördert.

11. Verfahren nach Anspruch 10, dadurch gekennzeichnet, daß jede Schlange, die vom Schlangenspeicher abgegeben wird, durch das Paddelrad (oder die Trommel) in der Matrix dadurch in Position gehalten wird, daß ihre Enden in entsprechenden schraubenlinienförmigen Nuten der beiden einen axialen Abstand aufweisenden, drehbar gelagerten, genuteten Trommeln gehalten wird.

12. Verfahren nach einem der Ansprüche 8 bis 11, dadurch gekennzeichnet, daß bei den Verfahren die Rippen dem Montagebereich dadurch zugefördert werden, daß die Rippen entlang einer tiefen Nut in einer der genannten drehbar gelagerten, genuteten Trommel geführt und zu Beginn der Matrixherstellung zwischen Schlangen angeordnet werden.

13. Verfahren nach einem der Ansprüche 8 bis 12, dadurch gekennzeichnet, daß die Matrix, die aus Rippen und Schlangen besteht, nach Erreichen einer vorgegebenen Größe aus der Stelle in den Nuten der Trommeln entnommen wird, und daß eine starre, selbsttragende Matrix aus ihr gebildet wird.

14. Verfahren nach Anspruch 13, dadurch gekennzeichnet, daß nach dem Entnehmen ein oberer und ein unterer Kühltank an den Schlangen der Matrix befestigt wird, so daS Kühlmittel von einem Tank zum anderen durch die Schlangen zu fließen vermag.

## Revendications

1. Dispositif d'assemblage d'échangeur de chaleur comprenant:
des moyens d'emmagasinage de tubes pour emmagasiner une série de tubes de refroidisseur;
des moyens de fourniture de tubes pour délivrer des tubes de refroidisseur desdits moyens d'emmagasinage de tubes à une zone d'assemblage;
des moyens de fourniture d'ailettes pour délivrer des ailettes à ladite zone d'assemblage;
des moyens de support pour maintenir une matrice d'ailettes et de tubes suivant un agencement alterné;
caractérisé en ce que deux tambours rainurés espacés axialement l'un de l'autre et montés à rotation sont disposés dans ladite zone d'assemblage, lesdits tambours étant conçus pour supporter ladite matrice et également pour tourner, pour ainsi éloigner ladite matrice de la zone d'assemblage dans une direction qui est sensiblement parallèle aux axes de rotation des tambours.

2. Dispositif selon la revendication 1, dans lequel lesdits moyens de fourniture d'ailettes comprennent une unité de fabrication d'ailettes.

3. Dispositif selon la revendication 1 ou la revendication 2, dans lequel lesdits moyens d'emmagasinage de tubes sont conçus pour emmagasiner des tubes sous la forme d'une pile verticale, ladite pile étant prévue pour maintenir des tubes relativement plats dans une orientation horizontale.

4. Dispositif selon l'une des revendications précédentes, dans lequel lesdits moyens de fourniture de tube comprennent au moins une roue (ou un tambour) à palettes ayant au moins une encoche et conçu(e) pour que, lorsqu'elle (ou il) tourne, l'encoche puisse recevoir un tube en provenance des moyens d'emmagasinage de tubes et déplacer le tube sur un arc circulaire jusqu'à une extrémité de la matrice adjacente à une ailette.

5. Dispositif selon l'une des revendications précédentes, dans lequel lesdits deux tambours rainurés espacés axialement l'un de l'autre et montés à rotation sont sensiblement cylindriques et ont des rainures hélicoïdales.

6. Dispositif selon l'une des revendications précédentes, le dispositif comprenant en outre une table inférieure pour supporter une matrice inférieure et un plateau supérieur pour supporter une matrice supérieure.

7. Dispositif selon la revendication 6, dans lequel le dispositif est conçu pour que des ailettes et des tubes puissent être sélectivement délivrés sur la table ou le plateau.

8. Procédé d'assemblage d'un échangeur de chaleur, utilisant le dispositif selon les revendications 1 à 7, procédé comprenant:
la fourniture de tubes de refroidisseur et d'ailettes à une zone d'assemblage de façon à réaliser une matrice d'ailettes et de tubes suivant un agencement alterné;
l'éloignement de la matrice de la zone d'assemblage;
caractérisé en ce que deux tambours rainurés espacés axialement l'un de l'autre et montés à rotation sont prévus dans ladite zone d'assemblage et, selon le procédé, ladite matrice est supportée dans des rainures des tambours; et
ladite matrice est éloignée de la zone d'assemblage, dans une direction sensiblement parallèle aux axes de rotation desdits tambours rainurés, par rotation desdits tambours.

9. Procédé selon la revendication 8, dans lequel, selon le procédé, les ailettes sont reçues l'une après l'autre d'une unité de fabrication d'ailettes, et les tubes retirés l'un après l'autre d'une pile de tubes, de façon à réaliser ladite matrice.

10. Procédé selon la revendication 8 ou la revendication 9, dans lequel, selon le procédé, des tubes sont délivrés à la zone d'assemblage en utilisant une roue (ou un tambour) à palettes ayant au moins une encoche, ladite roue (ou le tambour) étant entraîné(e) en rotation de telle sorte que ladite encoche reçoive un tube en provenance de moyens d'emmagasinage de tubes et déplace un tube sur un arc circulaire, jusqu'à une extrémité de la matrice adjacente à une ailette.

11. Procédé selon la revendication 10, dans lequel chaque tube qui est distribué à partir desdits moyens d'emmagasinage de tubes par la roue (ou le tambour) à palettes est maintenu en position dans la matrice par l'intermédiaire de ses extrémités qui sont maintenues dans des rainures hélicoïdales respectives desdits deux tambours rainurés espacés axialement l'un de l'autre et montés à rotation.

12. Procédé selon l'une des revendications 8 à 11, dans lequel, selon le procédé, des ailettes sont délivrées à la zone d'assemblage en faisant passer l'ailette le long d'une rainure profonde dans l'un desdits tambours rainurés montés à rotation et en logeant les ailettes entre des tubes, au début d'une formation de matrice.

13. Procédé selon l'une des revendications 8 à 12, dans lequel la matrice d'ailettes et de tubes, une fois qu'elle atteint une taille prédéterminée, est retirée de son emplacement dans les rainures des tambours et formée suivant une matrice autoporteuse rigide.

14. Procédé selon la revendication 13, dans lequel, après le retrait, des réservoirs de refroidisseur supérieur et inférieur sont ajustés aux tubes de la matrice pour que du réfrigérant soit apte à s'écouler d'un réservoir à l'autre par l'intermédiaire des tubes.
